(19) **Europäisches Patentamt European Patent Office Office européen des brevets**

(11) **EP 2 930 917 B1**

(12) **EUROPEAN PATENT SPECIFICATION**

(45) Date of publication and mention
of the grant of the patent:
**23.11.2016 Bulletin 2016/47**

(51) Int Cl.:
**H04M 9/08** (2006.01)

(21) Application number: **14163904.7**

(22) Date of filing: **08.04.2014**

(54) **Method and apparatus for updating filter coefficients of an adaptive echo canceller**

Verfahren und Vorrichtung zur Aktualisierung von Filterkoeffizienten eines adaptiven Echokompensators

Procédé et appareil pour mettre à jour des coefficients de filtre d'un annuleur d'écho adaptatif

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.10.2015 Bulletin 2015/42**

(73) Proprietor: **Weruaga, Luis
1090 Wien (AT)**

(72) Inventor: **Weruaga, Luis
1090 Wien (AT)**

(74) Representative: **Weiser, Andreas
Patentanwalt
Kopfgasse 7
1130 Wien (AT)**

(56) References cited:
**US-A1- 2006 018 460**

- **NITSCH B H: "A frequency-selective stepfactor control for an adaptive filter algorithm working in the frequency domain", SIGNAL PROCESSING, ELSEVIER SCIENCE PUBLISHERS B.V. AMSTERDAM, NL, vol. 80, no. 9, 1 September 2000 (2000-09-01), pages 1733-1745, XP004215536, ISSN: 0165-1684, DOI: 10.1016/S0165-1684(00)00084-0**

EP 2 930 917 B1

**Description**

**Field of the Invention**

The present invention relates to an improved technique for the identification of a passive acoustic system from the acoustic input signal to said system and an acoustic reference signal that contains the actual output of said system to said input signal. More specifically, the invention describes a computer-based method to implement the optimal frequency-domain adaptive filter that provides immunity against acoustic noise and interferences that may be present in the reference signal.

**Background of the Invention**

Acoustic echo cancellers (AECs) are regularly used to improve the sound quality of conversations conducted over full duplex communication systems, see e. g. P. Vary and R. Martin, "Digital speech transmission: Enhancement, coding and error concealment", Wisley, 2006. In a full duplex speech communication, two or more users communicate simultaneously with each other. Such full duplex conversations may be conducted using communications systems (i.e., devices) that use microphones and speakers, such as speakerphones, mobile telephones, computers, et cet. Acoustic echo may occur when sounds from a speaker (e.g., a telephone handset earpiece) are picked up by a microphone in the same room (e.g., the same handset's microphone). AECs often use speech signals during communications sessions (i.e., conversations) to estimate the echo response of the acoustic environment. In this way, an AEC may be trained to account for and reduce the acoustic echo.

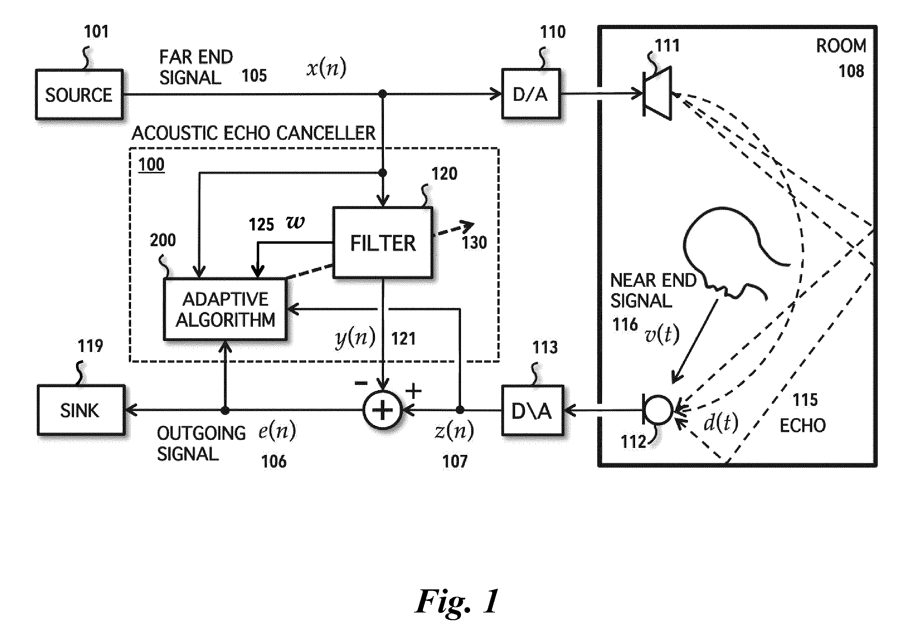

The problem of acoustic echo cancellation is briefly illustrated in FIG. 1. A digital audio signal $x(n)$ 105 coming from a far-end source 101 is converted to the analogue domain by a digital-to-analogue converter 110 and played by a loudspeaker 111 placed inside of a room or acoustic chamber 108; the resulting sound pressure wave propagates inside the room giving rise to an echo sound signal $d(t)$ 115 that is captured by the communication microphone 112 also located inside the room; said microphone also captures the near-end sound signals and background sounds 116 from the near-end speech communication; by means of an analogue-to-digital converter 113, the microphone signal is finally converted into a digital signal $z(n)$ 107. The goal of the acoustic echo canceller 100 is to remove the echo components that may be present in said digital signal $z(n)$; to this extent, a filter 120 generates an output digital signal $y(n)$ 121 from the samples of the far-end digital signal $x(n)$; $y(n)$ is digitally subtracted from $z(n)$ resulting in an error signal $e(n)$ 106 that is finally transmitted to the far end 119. Several scenarios fit into this communication model, such as people distant to each other communicating via digital voice-conferencing in an acoustic chamber, such as a room, a car, or outdoors; another scenario is a voice-commanded interface inside a car, where an audio signal such as music or radio is being played by the loudspeakers inside the car, this music signal disrupting the voice-commanded interface. Hence, source 101, acoustic chamber 108 and sink 119 can be of different nature.

The acoustic canceller usually corresponds to a digital linear transversal filter, whose output is built as follows

$$y(n) = \sum_{l=0}^{L-1} w_l x(n-l) \qquad (1)$$

where $w_l$ are the coefficients of the filter and L is the filter length. If said filter is close enough to the actual acoustic echo path, the outgoing signal $e(n)$ is said to be free of echo. In order to accomplish such an objective, an adaptive algorithm 200 performs periodically an estimate of the canceller misalignment based on the present and past samples of the error $e(n)$ and far-end signal $x(n)$, updating (130) the filter coefficients accordingly. When the echo is removed at large extent, the adaptive algorithm is said to have converged to the solution. Several adaptive algorithms are available in the state of the art, namely, least mean squares (LMS), normalized LMS (NLMS), block LMS, frequency-domain adaptive filter (FDAF), recursive least squares (RLS), fast RLS, etcetera.

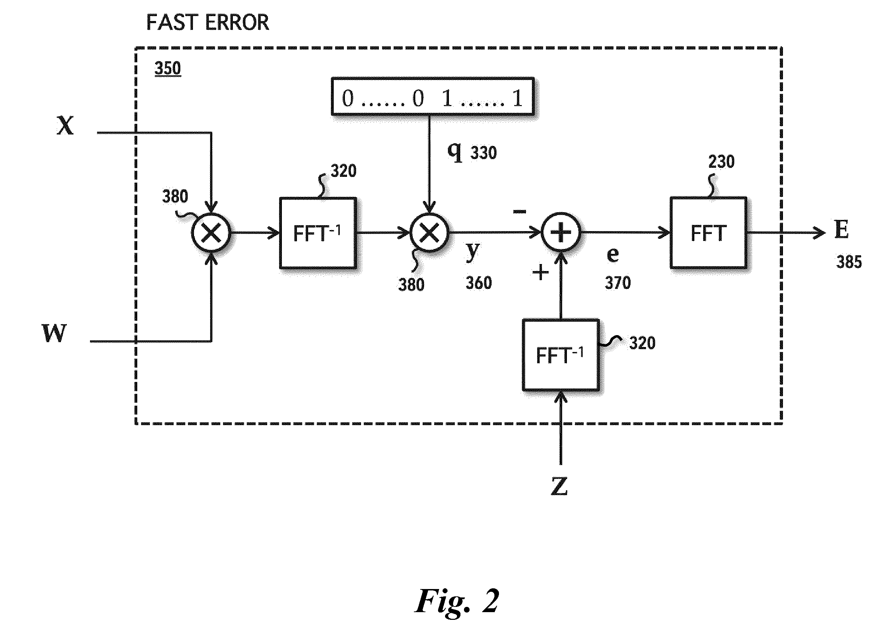

Due to the long nature of actual acoustic paths (hence $L$ is a large number), supported on FIG. 2, the output of the canceller can be efficiently obtained (370) in blocks of $M$ samples **y**. Said frequency-domain block-based convolution is implemented as follows

$$\mathbf{y} = \mathbf{q} \circ (\mathbf{F}^{-1}(\mathbf{W} \circ \mathbf{X})) \qquad (2)$$

where **F** is the $N$-point discrete Fourier transform (DFT) matrix 230, and **F-1** is thus the inverse discrete Fourier transform 320, the operation ° denotes element-by-element multiplication 380, and the $N$-point column vectors **W** and **X,** which correspond to the frequency domain (FD) canceller weights and input segment respectively, are as follows

$$\mathbf{W} = \mathbf{F}\left[w_0 \cdots w_{L-1} \ \ 0 \cdots\cdots 0\right]^T \quad\quad (3)$$

$$\mathbf{X} = \mathbf{F}\left[x(n - N + 1) \ \cdots \ x(n)\right]^T \quad\quad (4)$$

with $T$ denoting transpose. Without loss of generality, the segment length $N$ is considered to be power of 2 such that the DFT operation in (2), (3) and (4) can be evaluated efficiently with the fast Fourier transform (FFT) algorithm. The operation (2) delivers $M = N - L + 1$ valid output samples of the transversal filter. Hence, the window vector q is defined (330) accordingly $\mathbf{q} = [0 \cdots 0 \ 1 \cdots 1]^T$, and the output block is thus

$$\mathbf{y} = \left[0 \cdots\cdots 0 \ \ y(n - M + 1) \cdots \ y(n)\right] \quad\quad (5)$$

The error 370 between reference 260 and filter output **y** is obtained as

$$\mathbf{e} = \mathbf{z} - \mathbf{y} \quad\quad (6)$$

and the frequency-domain error 385 is obtained with the FFT algorithm 230 as follows

$$\mathbf{E} = \mathbf{F}\, \mathbf{e} \quad\quad (7)$$

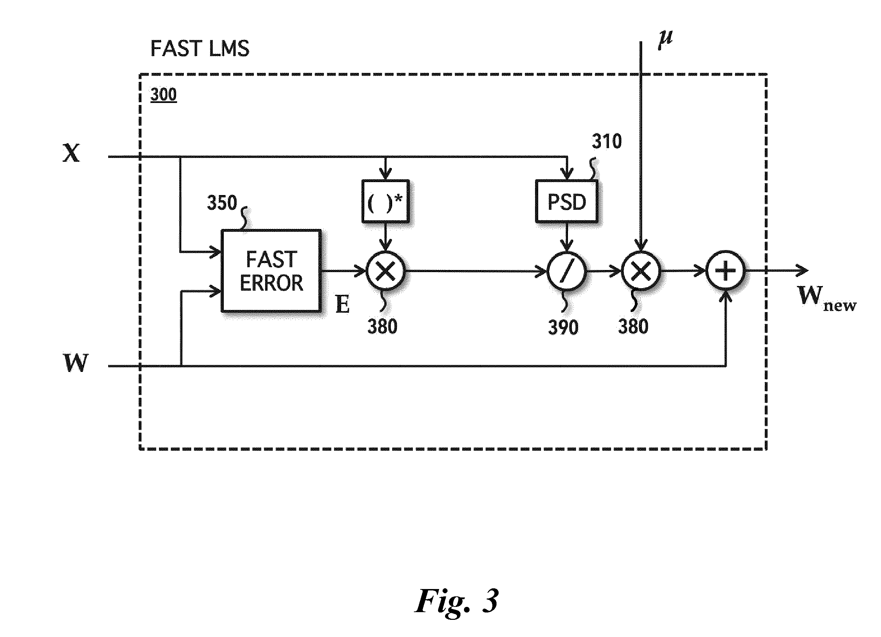

Supported on FIG. 3, the update of the frequency-domain weights is accomplished via the fast LMS algorithm 300 as follows

$$\mathbf{W}_{\text{new}} = \mathbf{W} + \mu \circ \mathbf{X}^* \circ \mathbf{E} \,/\, \overline{|\mathbf{X}|^2} \qu\quad (8)$$

where the resulting $\mathbf{W}_{\text{new}}$ contains the updated weights, $\mu$ is the FD step size vector, * denotes complex conjugate, the operations $\circ$ and / represent the element-by-element multiplication 380 and division 390 respectively, and $|\mathbf{X}|^2$ is the power spectral density of the far-end signal, which can be simply obtained in 310 by smoothing along the frequency axis the power spectral samples $|\mathbf{X}|^2$. Updating the FD weight as in eq. (8), codenamed frequency-domain adaptive filter (FDAP), is preferable over the update of the time-domain coefficients $w_l$ because it brings computational savings as well as attractive improvements in the speed of convergence to the solution.

In reality, the microphone digital signal $z(n)$ can be expressed as the sum of two components, namely, the near-end signal $v(n)$ and the echo $d(n)$, that is, $z(n) = d(n) + v(n)$. It is worth emphasizing that, neither $d(n)$ nor $v(n)$ are directly available, but only their sum $z(n)$. In case of important near-end activity, the filter coefficients upon update eq. (8) get corrupted with the near-end component $v(n)$ present in $z(n)$; this situation may lead to undesired divergence of said adaptive algorithm, resulting in annoying audio artefacts in the canceller output $y(n)$; in other cases, the filter coefficients get simply miss-updated, and the canceller is not able to remove the echo signal sufficiently, and the echo signal is thus sent to the far end. Reducing the magnitude or size of the update alleviates these problems only at some extent, but it limits the ability of the adaptive algorithm to track changes in the echo path.

In prior state of the art, see e.g. US 8 275 120 B2, the audio signals are processed by a plurality of adaptive acoustic echo cancellation filters, which use different adaptation techniques, and which may also use different parameters such as step size; the acoustic echo cancellation outputs are then linearly combined to form a final AEC output in the frequency domain; a simple linear combination of the canceller outputs could be based on a weight inversely proportional to the energy of the echo residual for each canceller.

In another prior work according to US 2012/0290525 A1, a non-linear echo canceller composed of the linear filter and a memoryless non-linear stage is proposed to account for nonlinearities of low-quality speakers, such as those found in mobile phones.

In order to remedy some of the limitations of an echo canceller, US 8 325 909 B2 teaches to use an echo suppressor: The output of the acoustic echo suppression is computed as a product of the content of a frequency bin in a frame and the probability the frequency bin in a frame comprises predominantly near-end signal, thereby making near-end signals more prominent than residual echoes.

Another example of echo suppressor is disclosed in US 8 355 511 B2, wherein a noise gain mask and an echo gain mask obtained from the primary acoustic signal and the far-end acoustic signal are generated; the combination of the echo gain mask and noise gain mask may then be applied to the primary acoustic signal to generate a masked signal, which may be output to a far-end environment.

Non-linear post processing of the residual echo has also been considered in WO 2012/158164 A1.

Another popular approach to provide robustness against near-end signals is the use of double-talk detection (DTD), see e.g. US 2012/0250852 A1; T. Gänsler and J. Benesty, "The fast normalized cross-correlation double-talk detector", Signal Processing, vol. 86, no. 6, pp. 1124-1139, Jun. 2006; and T. van Waterschoot, G. Rombouts, P. Verhoeve, and M. Moonen, "Double-talk-robust prediction error identification algorithms for acoustic echo cancellation", IEEE Transactions on Signal Processing, vol. 55, no. 3, pp. 846-858, Mar. 2007; to literally stop the filter update when sufficient near-end activity is detected. In general, a double-talk detector takes such a decision based on the signals $x(n)$, $e(n)$, $y(n)$, $z(n)$ along with their previous samples. Accurate DTD is however a challenging problem, and false positives often occur, leading to the mentioned filter misalignment and algorithm divergence.

An elegant theoretical framework to combat near-end activity is to selectively update the frequency-domain filter coefficients **W** in eq. (8) based on the magnitude of the near-end signals in the canceller error. An optimal FD step size has been already deduced in B. H. Nitsch, "A frequency-selective stepfactor control for an adaptive filter algorithm working in the frequency domain", Signal Processing, vol. 80, no. 9, pp. 1733-1745, Sep. 2000, as the ratio between the residual echo and the error

$$\mu_k = \frac{E\{|D_k - Y_k|^2\}}{E\{|V_k|^2\} + E\{|D_k - Y_k|^2\}} \tag{9}$$

where E{} denotes statistical expectation, and $D_k$, $Y_k$ and $V_k$ represent the $k$th spectral bin of the actual echo $d(n)$, the canceller output $y(n)$, and the near-end signal $v(n)$ respectively.

Another expression found in K. Shi and X. Ma, "A frequency domain step-size control method for LMS algorithms", IEEE Signal Processing Letters, vol. 17, no. 2, pp. 125-128, Feb. 2010, for an optimal FD step size is

$$\mu_k = 1 - \sqrt{\frac{E\{|V_k|^2\}}{E\{|V_k|^2\} + E\{|D_k - Y_k|^2\}}} \tag{10}$$

In any case, the evaluation of any of those eqs. (9) and (10) requires the estimation of the power spectral magnitude of the residual echo $D_k$ - $Y_k$ and the near-end activity $V_k$. However, such spectral samples are not explicitly available, and their accurate estimation is to the best of the inventor's knowledge an unsolved challenging problem. The existing works to date, such as *K. Shi and X. Ma,* loc. cit., are essentially based on smoothing the available power spectral samples over time, hence performing far from optimally in real non-stationary acoustic scenarios.

**Summary of the Invention**

The present invention discloses a method for the identification of acoustic systems (e.g. the cancellation of acoustic echoes) that is robust to near-end interferences. The update of the frequency-domain coefficients of the canceller digital filter is carried out in blocks and according to a step size tailored for each coefficient. One claim of the proposed invention is a novel method to compute the optimal step size for each frequency-domain filter coefficient. To that effect, at each block a well-conditioned inverse problem of linear equations with equality constraints is solved. Said algebraic problem derives from the analytical study of the impact of the weight update over the next block for two extreme cases, namely, a frozen (zero) weight update and a full weight update. The proposed method can be implemented and realized efficiently in a digital computer.

In particular, in a first aspect the invention provides for a computer-implemented method for updating a frequency-domain filter coefficient of an adaptive echo canceller, the filter coefficients of which are updateable in the frequency-domain in successive blocks, comprising:

determining at a first block a first residual spectral error of the canceller and at a second block both a second residual spectral error of the canceller using a zero update step size for said filter coefficient as well as a third residual spectral error of the canceller using a full update step size for said filter coefficient;

determining an optimal update step size for said filter coefficient from said first, second and third residual spectral errors; and

updating said filter coefficient by using said optimal update step size.

In a second aspect the invention provides for a computer program embodied on a computer-readable medium, configured to execute, when run on a computer, the method disclosed herein.

In a third aspect of the invention it is provided for an adaptive echo canceller, the filter coefficients of which being updateable in the frequency-domain in successive blocks, wherein the canceller is configured to

determine at a first block a first residual spectral error of the canceller and at a second block both a second residual spectral error of the canceller using a zero update step size for at least one filter coefficient as well as a third residual spectral error of the canceller using a full update step size for said filter coefficient,

determine an optimal update step size for said filter coefficient from said first, second and third residual spectral errors, and

update said filter coefficient by using said optimal update step size.

## Brief Description of the Drawings

Exemplary embodiments of the invention will now be described in detail under reference to the enclosed drawings in which:

FIG. 1 is a block diagram of an acoustic echo canceller in an operating scenario subject to near-end activity;

FIG. 2 is a block diagram of the error calculation stage of the echo canceller of FIG. 1 in the frequency-domain;

FIG. 3 is a block diagram of the updating stage for the frequency-domain filter coefficients (weights) of the echo canceller of FIGS. 1 and 2; and

FIG. 4 is a combined block diagram and signal flow chart of the method and apparatus of the invention for determining an optimal update step size for the updating stage of Fig. 3 of the echo canceller of FIGS. 1 and 2.

## Detailed Description of the Invention

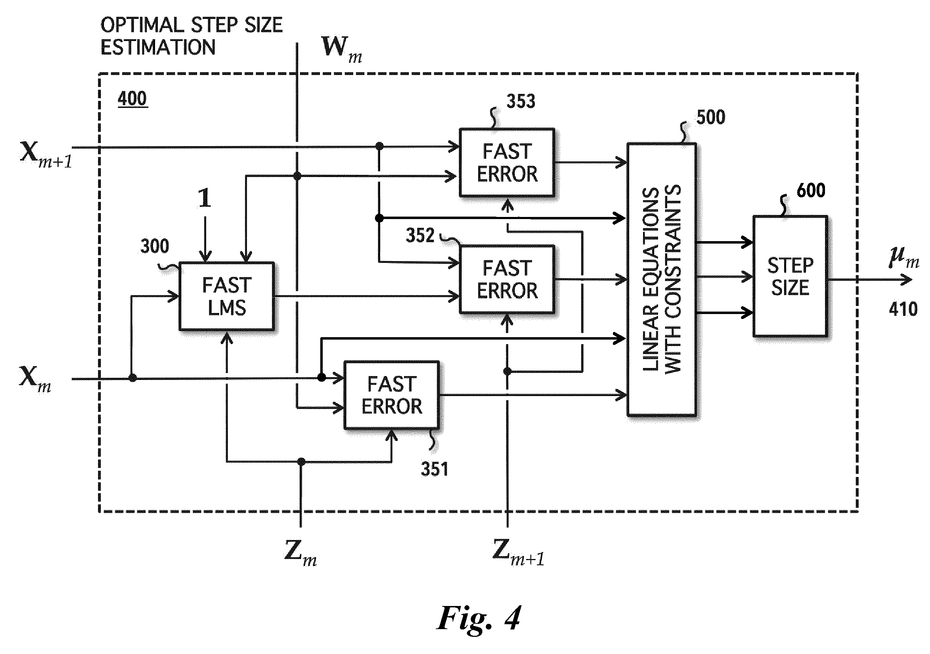

The present invention discloses a method for acoustic system identification and acoustic echo cancellation that is robust to near-end interferences. The update of the frequency-domain coefficients of the canceller's adaptive digital filter is carried out in blocks and according to a step size tailored for each coefficient. The method for computing the optimal update step size (frequency-domain step size) of the frequency-domain adaptive filter in real scenarios with near-end activity represents the main claim of the disclosed invention. Said novel method corresponds to the block 400 in FIG. 4.

The evaluation of any type of optimal frequency-domain step size as in eqs. (9) or (10) at a given $m$th block and $k$th frequency bin can be revamped as the problem of estimating the following two terms

$$\Psi_{m,k} = E\{|V_{m,k}|^2\} \qquad (11)$$

$$\Phi_{m,k} = E\{|G_{m,k}|^2\} \qquad (12)$$

where $V_{m,k}$ denotes the (unknown) spectral samples of the near-end signal $v(n)$ present in the microphone signal $z(n)$, and $G_{m,k}$ denotes the (unknown) canceller weight misalignment. In spectral sense, said misalignment is related to the residual echo $d(n) - y(n)$ as follows

$$D_{m,k} - Y_{m,k} = G_{m,k} X_{m,k} \qquad (13)$$

where $X_{m,k}$ represents the spectral samples of the far-end signal $x(n)$ at the $m$th block and $k$th frequency bin. The method to compute the optimal frequency-domain step size disclosed in the present document is thus based on estimating the terms in eqs. (11) and (12) according to the reasoning detailed in the following. The full-weight update, $\mu_m = 1$ in eq. (8), results in minimum *a posteriori* square error; in the event of double talk, the previous statement implies that the canceller weights get fully corrupted with the near-end activity $v(n)$ that may be present in the microphone signal $z(n)$.

The present solution is based on the insight that the assessment and convergence of a learning machine, such as the adaptive filter of concern, is best performed on testing data statistically independent from the training data. To this end, the present solution proposes to use signals from *another* block, such as the next ($m$ + 1)th block, or generally any later block $m$ + $i$ ($i$ = 1, 2, 3, ...), or even a prior block $m$ - $i$, as such testing data. In the following, two consecutive blocks $m$ and $m$ + 1 are considered for exemplary purposes only.

In consequence, the following three frequency-domain errors are evaluated in the fast-error systems 351, 352 and 353, respectively:

$$E_{m,k} = Z_{m,k} - W_{m,k} X_{m,k} \tag{14}$$

$$B_{m+1,k} = Z_{m+1,k} - W_{m,k} X_{m+1,k} \tag{15}$$

$$C_{m+1,k} = Z_{m+1,k} - \left( W_{m,k} + \frac{X^*_{m,k} E_{m,k}}{\overline{\left| X_{m,k} \right|^2}} \right) X_{m+1,k} \tag{16}$$

where $Z_{m,k}$ represents the spectral samples of the microphone signal $z(n)$ at the $m$th block and $k$th frequency bin, and $W_{m,k}$ represents the frequency-domain coefficients of the adaptive filter at said block and said frequency bin. The error $E_{m,k}$, eq. (14), corresponds to the *a priori* spectral error at the current $m$th block, and $B_m$+1,$k$, eq. (15), and $C_m$ + $1,k$, eq. (16), are the "look-ahead" spectral errors at the next ($m$ +1)th block for two different extreme cases, namely, for a frozen update, eq. (8), with $\mu_m$ = **0**, and for a full update (300) with $\mu_m$ = **1**, respectively.

Upon replacement of the spectral residual echo, eq. (13), said spectral errors, eqs. (14) - (16), can be also expressed as follows

$$E_{m,k} = V_{m,k} + G_{m,k} X_{m,k} \tag{17}$$

$$B_{m+1,k} = V_{m+1,k} + G_{m,k} X_{m+1,k} \tag{18}$$

$$C_{m+1,k} = V_{m+1,k} + G_{m,k} X_{m+1,k} - E_{m,k} \frac{X^*_{m,k} X_{m+1,k}}{\overline{\left| X_{m,k} \right|^2}} \tag{19}$$

From the eqs. (17), (18) and (19), one can deduce that the power spectral density (PSD) of said errors is

$$\overline{\left| E_{m,k} \right|^2} = \Psi_{m,k} + \Phi_{m,k} \left| X_{m,k} \right|^2 \tag{20}$$

$$\overline{\left| B_{m+1,k} \right|^2} = \Psi_{m+1,k} + \Phi_{m,k} \left| X_{m+1,k} \right|^2 \tag{21}$$

$$\overline{\left| C_{m+1,k} \right|^2} = \Psi_{m+1,k} + 0.6\, \Phi_{m,k} \left| X_{m+1,k} \right|^2 + \frac{\overline{\left| X_{m+1,k} \right|^2}}{\overline{\left| X_{m,k} \right|^2}} \Psi_{m,k} \tag{22}$$

The last term in eq. (22) corresponds to the undesired corruption caused by the presence of near-end activity in the $m$th block, while the reduction of weight misalignment upon full update is in accordance with the speed of convergence of the FD adaptive filter

$$\Phi_{m+1,k} = \left(1 - \frac{1}{N}\right)^{M} \Phi_{m,k} \cong 0.6\, \Phi_{m,k} \qquad (23)$$

when M is large and $M \cong N/2$.

Therefore, eqs. (20), (21) and (22) can be rewritten in matrix form as a system of linear equations subject to inequality constraints

$$\begin{bmatrix} 1 & 0 & \overline{\left|X_{m,k}\right|^2} \\ 0 & 1 & \overline{\left|X_{m+1,k}\right|^2} \\ \dfrac{\overline{\left|X_{m+1,k}\right|^2}}{\overline{\left|X_{m,k}\right|^2}} & 1 & 0.6\,\overline{\left|X_{m+1,k}\right|^2} \end{bmatrix} \begin{bmatrix} \Psi_{m,k} \\ \Psi_{m+1,k} \\ \Phi_{m,k} \end{bmatrix} = \begin{bmatrix} \overline{\left|E_{m,k}\right|^2} \\ \overline{\left|B_{m+1,k}\right|^2} \\ \overline{\left|C_{m+1,k}\right|^2} \end{bmatrix} \qquad (24)$$

subject to $\Psi_{m,k} \geq 0$, $\Psi_{m+1,k} \geq 0$, $\Phi_{m,k} \geq 0$.

The values $\overline{|X_{m,k}|^2}$, $\overline{|Xm+1,k|^2}$, $\overline{|E_{m,k}|^2}$, $\overline{|B_m + 1,k|^2}$ and $\overline{|C_m + 1,k|^2}$ are obtained from the respective power spectral samples by smoothing them along the frequency dimension k. The solution for $\Psi_{m,k}$, $\Psi_{m+1,k}$ and $\Phi_{m,k}$ to the resulting inverse problem, eq. (24), can be obtained with standard algebraic methods, such as linear programming. This task is carried out by the processing block 500. Upon the solution, the optimal FD step size, eq. (9), is simply obtained with the processor 600 as follows

$$\mu_{m,k} = \frac{\Phi_{m,k}\,\overline{\left|X_{m,k}\right|^2}}{\Psi_{m,k} + \Phi_{m,k}\,\overline{\left|X_{m,k}\right|^2}} \qquad (25)$$

In case that eq. (10) is chosen as step size, the processor 600 computes the following operation instead

$$\mu_{m,k} = 1 - \sqrt{\frac{\Psi_{m,k}}{\Psi_{m,k} + \Phi_{m,k}\,\overline{\left|X_{m,k}\right|^2}}} \qquad (26)$$

It should be mentioned that the method and echo canceller disclosed herein require signal samples from two different blocks, a "first" $m$th block, and a "second" ($m \pm i$)th block, so that the update of the frequency-domain filter coefficients (weights) is subject to a delay of $i$ blocks. As the person skilled in the art can immediately understand, this delay does not affect the regular operation of the method or canceller in regard to its output.

Furthermore, it should be added that referring to the blocks $m$ and $m + 1$ in the present disclosure is for explanatory purposes only; in fact, any first and second blocks $m$ and $m \pm i$ ($i$ = 1, 2, 3, ...), respectively, could be used accordingly. Also, the term "optimal" used herein encompasses both full-optimal and sub-optimal cases.

The $k$ update step sizes $\mu_{m,k}$), determined in this way and the $k$ frequency-domain filter coefficients $W_{m,k}$ updated thereby can then be applied to echo-cancel any block, including the later one of the first and second blocks, or any subsequent block.

**Claims**

1. A computer-implemented method for updating a frequency-domain filter coefficient $W_{m,k}$ of a frequency bin $k$ of an adaptive echo canceller (100) the filter coefficients of which are updateable in the frequency-domain in successive blocks $m$, $m+1$, $m+2$, ..., **characterised by**:

   determining at a first block a first residual spectral error $E_{m,k}$ of the canceller and at a second block both a second residual spectral error $B_{m\pm i,k}$ of the canceller using a zero update step size for said filter coefficient as well as a third residual spectral error $C_{m\pm i,k}$ of the canceller using a full update step size for said filter coefficient;
   determining an optimal update step size $\mu_{m,k}$ for said filter coefficient from said first, second and third residual spectral errors; and
   updating said filter coefficient $W_{m,k}$ by using said optimal update step size $\mu_{m,k}$ according to

$$W_{m+1,k} = W_{m,k} + \mu_{m,k} \frac{E_{m,k} X_{m,k}^*}{\left| X_{m,k} \right|^2} \; ;$$

   wherein said first, second and third residual spectral errors are determined according to

$$E_{m,k} = Z_{m,k} - W_{m,k} X_{m,k} \; ,$$

$$B_{m\pm i,k} = Z_{m\pm i,k} - W_{m,k} X_{m\pm i,k} \; ,$$

$$C_{m\pm i,k} = Z_{m\pm i,k} - \left( W_{m,k} + \frac{X_{m,k}^* E_{m,k}}{\left| X_{m,k} \right|^2} \right) X_{m\pm i,k} \; ;$$

   $W_{m,k}$ being said frequency-domain filter coefficient at said first block;
   $X_{m,k}$ being the spectral samples of a source signal of the echo canceller at said first block;
   $Xm_{\pm i,k}$ being the spectral samples of the source signal of the echo canceller at said second block;
   $Z_{m,k}$ being the spectral samples of a microphone signal of the echo canceller at said first block;
   $Z_{m\pm i,k}$ being the spectral samples of the microphone signal of the echo canceller at said second block;
   $E_{m,k}$ being said first residual spectral error at said first block;
   $Bm_{\pm i,k}$ being said second residual spectral error when using said zero update step size at said second block;
   $Cm_{\pm i,k}$ being said third residual spectral error when using said full update step size at said second block; and

   wherein * designates complex conjugate and $\overline{(\cdot)}$ designates smoothing over $k$.

2. The method of claim 1, wherein said optimal update step size $\mu_{m,k}$ is determined as

$$\mu_{m,k} = \frac{\Phi_{m,k} \overline{\left| X_{m,k} \right|^2}}{\Psi_{m,k} + \Phi_{m,k} \overline{\left| X_{m,k} \right|^2}} \; ,$$

   $\Psi_{m,k}$ and $\Phi_{m,k}$ being determined by solving

$$
\begin{bmatrix}
1 & 0 & \overline{|X_{m,k}|^2} \\
0 & 1 & \overline{|X_{m\pm i,k}|^2} \\
\dfrac{\overline{|X_{m\pm i,k}|^2}}{\overline{|X_{m,k}|^2}} & 1 & 0.6\,\overline{|X_{m\pm i,k}|^2}
\end{bmatrix}
\begin{bmatrix}
\Psi_{m,k} \\
\Psi_{m\pm i,k} \\
\Phi_{m,k}
\end{bmatrix}
=
\begin{bmatrix}
\overline{|E_{m,k}|^2} \\
\overline{|B_{m\pm i,k}|^2} \\
\overline{|C_{m\pm i,k}|^2}
\end{bmatrix}
$$

subject to $\Psi_{m,k} \geq 0$, $\Psi_{m\pm i,k} \geq 0$, $\Phi_{m,k} \geq 0$.

3. The method of claim 1, wherein said optimal update step size $\mu_{m,k}$ is determined as

$$
\mu_{m,k} = 1 - \sqrt{\dfrac{\Psi_{m,k}}{\Psi_{m,k} + \Phi_{m,k}\,\overline{|X_{m,k}|^2}}}\,,
$$

$\Psi_{m,k}$ and $\Phi_{m,k}$ being determined by solving

$$
\begin{bmatrix}
1 & 0 & \overline{|X_{m,k}|^2} \\
0 & 1 & \overline{|X_{m\pm i,k}|^2} \\
\dfrac{\overline{|X_{m\pm i,k}|^2}}{\overline{|X_{m,k}|^2}} & 1 & 0.6\,\overline{|X_{m\pm i,k}|^2}
\end{bmatrix}
\begin{bmatrix}
\Psi_{m,k} \\
\Psi_{m\pm i,k} \\
\Phi_{m,k}
\end{bmatrix}
=
\begin{bmatrix}
\overline{|E_{m,k}|^2} \\
\overline{|B_{m\pm i,k}|^2} \\
\overline{|C_{m\pm i,k}|^2}
\end{bmatrix}
$$

subject to $\Psi_{m,k} \geq 0$, $\Psi_{m\pm i,k} \geq 0$, $\Phi_{m,k} \geq 0$.

4. The method of any of the claims 1 to 3, wherein the method is repeated for at least one further frequency-domain filter coefficient $W_{m,k}$ of a different frequency bin $k*$.

5. The method of any of the claims 1 to 4, wherein said first and second blocks are immediately succeeding one another in time.

6. The method of any of the claims 1 to 4, wherein said first and second blocks are spaced from one another in time by at least one block.

7. A computer program embodied on a computer-readable medium and configured to execute, when run on a computer, the method of any of the claims 1 to 6.

8. An adaptive echo canceller, the filter coefficients $W_{m,k}$ of a frequency bin $k$ of which being updateable in the frequency-domain in successive blocks $m, m+1, m+2, ...,$ **characterised in that** the canceller is configured to determine at a first block a first residual spectral error $E_{m,k}$ of the canceller and at a second block both a second residual spectral error $B_{m\pm i,k}$ of the canceller using a zero update step size for at least one filter coefficient $W_{m,k}$ as well as a third residual spectral error $C_{m\pm i,k}$ of the canceller using a full update step size for said filter co-efficient, determine an optimal update step size $\mu_{m,k}$ for said filter coefficient ($W_{m,k}$) from said first, second and third residual spectral errors $E_{m,k}, B_{m\pm i,k}, C_{m\pm i,k}$, and update said filter coefficient ($W_{m,k}$) by using said optimal update step size ($\mu_{m,k}$) according to

$$W_{m+1,k} = W_{m,k} + \mu_{m,k} \frac{E_{m,k} X^*_{m,k}}{\overline{|X_{m,k}|^2}} \;;$$

wherein said first, second and third residual spectral errors are determined according to

$$E_{m,k} = Z_{m,k} - W_{m,k} X_{m,k} \,,$$

$$B_{m\pm i,k} = Z_{m\pm i,k} - W_{m,k} X_{m\pm i,k} \,,$$

$$C_{m\pm i,k} = Z_{m\pm i,k} - \left( W_{m,k} + \frac{X^*_{m,k} E_{m,k}}{\overline{|X_{m,k}|^2}} \right) X_{m\pm i,k} \;;$$

$W_{m,k}$ being said frequency-domain filter coefficient at said first block;
$X_{m,k}$ being the spectral samples of a source signal of the echo canceller at said first block;
$X_{m\pm i,k}$ being the spectral samples of the source signal of the echo canceller at said second block;
$Z_{m,k}$ being the spectral samples of a microphone signal of the echo canceller at said first block;
$Z_{m\pm i,k}$ being the spectral samples of the microphone signal of the echo canceller at said second block;
$E_{m,k}$ being said first residual spectral error at said first block;
$B_{m\pm i,k}$ being said second residual spectral error when using said zero update step size at said second block;
$C_{m\pm i,k}$ being said third residual spectral error when using said full update step size at said second block; and
wherein * designates complex conjugate and $\overline{(\cdot)}$ designates smoothing over $k$.

9. The adaptive echo canceller of claim 8, wherein the canceller is configured to determine said optimal update step size $\mu_{m,k}$ as

$$\mu_{m,k} = \frac{\Phi_{m,k} \overline{|X_{m,k}|^2}}{\Psi_{m,k} + \Phi_{m,k} \overline{|X_{m,k}|^2}} \,,$$

$\Psi_{m,k}$ and $\Phi_{m,k}$ being determined by solving

$$\begin{bmatrix} 1 & 0 & \overline{|X_{m,k}|^2} \\ 0 & 1 & \overline{|X_{m\pm i,k}|^2} \\ \dfrac{\overline{|X_{m\pm i,k}|^2}}{\overline{|X_{m,k}|^2}} & 1 & 0.6\overline{|X_{m\pm i,k}|^2} \end{bmatrix} \begin{bmatrix} \Psi_{m,k} \\ \Psi_{m\pm i,k} \\ \Phi_{m,k} \end{bmatrix} = \begin{bmatrix} \overline{|E_{m,k}|^2} \\ \overline{|B_{m\pm i,k}|^2} \\ \overline{|C_{m\pm i,k}|^2} \end{bmatrix}$$

subject to $\Psi_{m,k} \geq 0$, $\Psi_{m\pm i,k} \geq 0$, $\Phi_{m,k} \geq 0$.

**10.** The adaptive echo canceller of claim 8, wherein the canceller is configured to determine said optimal update step size $\mu_{m,k}$ as

$$\mu_{m,k} = 1 - \sqrt{\frac{\Psi_{m,k}}{\Psi_{m,k} + \Phi_{m,k}\overline{\left|X_{m,k}\right|^2}}},$$

$\Psi_{m,k}$ and $\Phi_{m,k}$ being determined by solving

$$\begin{bmatrix} 1 & 0 & \overline{\left|X_{m,k}\right|^2} \\ 0 & 1 & \overline{\left|X_{m\pm i,k}\right|^2} \\ \dfrac{\overline{\left|X_{m\pm i,k}\right|^2}}{\overline{\left|X_{m,k}\right|^2}} & 1 & 0.6\,\overline{\left|X_{m\pm i,k}\right|^2} \end{bmatrix} \begin{bmatrix} \Psi_{m,k} \\ \Psi_{m\pm i,k} \\ \Phi_{m,k} \end{bmatrix} = \begin{bmatrix} \overline{\left|E_{m,k}\right|^2} \\ \overline{\left|B_{m\pm i,k}\right|^2} \\ \overline{\left|C_{m\pm i,k}\right|^2} \end{bmatrix}$$

subject to $\Psi_{m,k} \geq 0$, $\Psi_{m\pm i,k} \geq 0$, $\Phi_{m,k} \geq 0$.

## Patentansprüche

**1.** Computerimplementiertes Verfahren zum Aktualisieren eines Frequenzbereichs-Filterkoeffizienten $W_{m,k}$ eines Frequenzbins *k* eines adaptiven Echounterdrückers (100), dessen Filterkoeffizienten im Frequenzbereich in aufeinanderfolgenden Blöcken *m, m+1, m+2, ...* aktualisierbar sind, **gekennzeichnet durch**:

Bestimmen, an einem ersten Block, eines ersten Restspektralfehlers $E_{m,k}$ des Unterdrückers und, an einem zweiten Block, sowohl eines zweiten Restspektralfehlers $B_{m\pm i,k}$ des Unterdrückers unter Verwendung einer Null-Aktualisierungsschrittgröße für den genannten Filterkoeffizienten als auch eines dritten Restspektralfehlers $C_{m\pm i,k}$ des Unterdrückers unter Verwendung einer vollen Aktualisierungsschrittgröße für den genannten Filterkoeffizienten;
Bestimmen einer optimalen Aktualisierungsschrittgröße $\mu_{m,k}$ für den genannten Filterkoeffizienten aus dem genannten ersten, zweiten und dritten Restspektralfehler; und
Aktualisieren des genannten Filterkoeffizienten $W_{m,k}$ unter Verwendung der genannten optimalen Aktualisierungsschrittgröße $\mu_{m,k}$ gemäß

$$W_{m+1,k} = W_{m,k} + \mu_{m,k}\frac{E_{m,k}X_{m,k}^{*}}{\left|X_{m,k}\right|^2} \; ;$$

wobei der genannte erste, zweite und dritte Restspektralfehler gemäß

$$E_{m,k} = Z_{m,k} - W_{m,k}X_{m,k} \, ,$$

$$B_{m+1,k} = Z_{m+1,k} - W_{m,k}X_{m+1,k} \, ,$$

$$C_{m+1,k} = Z_{m+1,k} - \left( W_{m,k} + \frac{X_{m,k}^{*} E_{m,k}}{\left| X_{m,k} \right|^{2}} \right) X_{m+1,k}$$

bestimmt werden; wobei

$W_{m,k}$ der genannte Frequenzbereichs-Filterkoeffizient am genannten ersten Block ist;

$X_{m,k}$ die Spektralabtastwerte eines Eingangssignals des Echounterdrückers am genannten ersten Block sind;

$X_{m\pm i,k}$ die Spektralabtastwerte des Eingangssignals des Echounterdrückers am genannten zweiten Block sind;

$Z_{m,k}$ die Spektralabtastwerte eines Mikrofonsignals des Echounterdrückers am genannten ersten Block sind;

$Z_{m\pm i,k}$ die Spektralteile des Mikrofonsignals des Echounterdrückers am genannten zweiten Block sind;

$E_{m,k}$ der genannte erste Restspektralfehler am genannten ersten Block ist;

$B_{m\pm i,k}$ der genannte zweite Restspektralfehler unter Verwendung der genannten Null-Aktualisierungsschrittgröße am genannten zweiten Block ist;

$C_{m\pm i,k}$ der genannte dritte Restspektralfehler unter Verwendung der genannten vollen Aktualisierungsschrittgröße am genannten zweiten Block ist; und

wobei * die Komplex-konjugierte und $\overline{(\cdot)}$ ein Glätten über $k$ bezeichnet.

2. Verfahren nach Anspruch 1, wobei die genannte optimale Aktualisierungsschrittgröße $\mu_{m,k}$ als

$$\mu_{m,k} = \frac{\Phi_{m,k} \overline{\left| X_{m,k} \right|^{2}}}{\Psi_{m,k} + \Phi_{m,k} \overline{\left| X_{m,k} \right|^{2}}}$$

bestimmt wird, wobei $\Psi_{m,k}$ und $\Phi_{m,k}$ bestimmt werden durch Lösen von

$$\begin{bmatrix} 1 & 0 & \overline{\left| X_{m,k} \right|^{2}} \\ 0 & 1 & \overline{\left| X_{m\pm i,k} \right|^{2}} \\ \frac{\overline{\left| X_{m\pm i,k} \right|^{2}}}{\overline{\left| X_{m,k} \right|^{2}}} & 1 & 0.6 \overline{\left| X_{m\pm i,k} \right|^{2}} \end{bmatrix} \begin{bmatrix} \Psi_{m,k} \\ \Psi_{m\pm i,k} \\ \Phi_{m,k} \end{bmatrix} = \begin{bmatrix} \overline{\left| E_{m,k} \right|^{2}} \\ \overline{\left| B_{m\pm i,k} \right|^{2}} \\ \overline{\left| C_{m\pm i,k} \right|^{2}} \end{bmatrix}$$

unter der Bedingung $\Psi_{m,k} \geq 0$, $\Psi_{m\pm i,k} \geq 0$, $\Phi_{m,k} \geq 0$.

3. Verfahren nach Anspruch 1, wobei die genannte optimale Aktualisierungsschrittgröße $\mu_{m,k}$ als

$$\mu_{m,k} = 1 - \sqrt{\frac{\Psi_{m,k}}{\Psi_{m,k} + \Phi_{m,k} \overline{\left| X_{m,k} \right|^{2}}}}$$

bestimmt wird, wobei $\Psi_{m,k}$ und $\Phi_{m,k}$ bestimmt werden durch Lösen von

$$\begin{bmatrix} 1 & 0 & \overline{|X_{m,k}|^2} \\ 0 & 1 & \overline{|X_{m\pm i,k}|^2} \\ \dfrac{\overline{|X_{m\pm i,k}|^2}}{\overline{|X_{m,k}|^2}} & 1 & 0.6\,\overline{|X_{m\pm i,k}|^2} \end{bmatrix} \begin{bmatrix} \Psi_{m,k} \\ \Psi_{m\pm i,k} \\ \Phi_{m,k} \end{bmatrix} = \begin{bmatrix} \overline{|E_{m,k}|^2} \\ \overline{|B_{m\pm i,k}|^2} \\ \overline{|C_{m\pm i,k}|^2} \end{bmatrix}$$

unter der Bedingung $\Psi_{m,k} \geq 0$, $\Psi_{m\pm i,k} \geq 0$, $\Phi_{m,k} \geq 0$ .

4. Verfahren nach einem der Ansprüche 1 bis 3, wobei das Verfahren für zumindest einen weiteren Frequenzbereichs-Filterkoeffizienten $W_{m,k}$ eines anderen Frequenzbins $k$ wiederholt wird.

5. Verfahren nach einem der Ansprüche 1 bis 4, wobei der genannte erste und der genannte zweite Block einander zeitlich direkt aufeinanderfolgen.

6. Verfahren nach einem der Ansprüche 1 bis 4, wobei der genannte erste und der genannte zweite Block voneinander zeitlich durch zumindest einen Block beabstandet sind.

7. Computerprogramm, verkörpert auf einem computerlesbaren Medium und dazu ausgebildet, das Verfahren nach einem der Ansprüche 1 bis 6 auszuführen, wenn es auf einem Computer läuft.

8. Adaptiver Echounterdrücker, dessen Filterkoeffizienten $W_{m,k}$ eines Frequenzbins $k$ im Frequenzbereich in aufeinanderfolgenden Blöcken $m$, $m+1$, $m+2$ ... aktualisierbar sind,
**dadurch gekennzeichnet, dass** der Unterdrücker ausgebildet ist zum
Bestimmen, an einem ersten Blocks, eines ersten Restspektralfehlers $E_{m,k}$ des Unterdrückers und, an einem zweiten Block, sowohl eines zweiten Restspektralfehlers $B_{m\pm i,k}$ des Unterdrückers unter Verwendung einer Null-Aktualisierungsschrittgröße für den genannten Filterkoeffizienten als auch eines dritten Restspektralfehlers $C_{m\pm i,k}$ des Unterdrückers unter Verwendung einer vollen Aktualisierungsschrittgröße für den genannten Filterkoeffizienten;
Bestimmen einer optimalen Aktualisierungsschrittgröße $\mu_{m,k}$ für den genannten Filterkoeffizienten ($W_{m,k}$) aus dem genannten ersten, zweiten und dritten Restspektralfehler $E_{m,k}$, $B_{m\pm i,k}$, $C_{m\pm i,k}$; und
Aktualisieren des genannten Filterkoeffizienten $W_{m,k}$ unter Verwendung der genannten optimalen Aktualisierungsschrittgröße $\mu_{m,k}$ gemäß

$$W_{m+1,k} = W_{m,k} + \mu_{m,k}\frac{E_{m,k}X_{m,k}^{*}}{|X_{m,k}|^2}\ ;$$

wobei der genannte erste, zweite und dritte Restspektralfehler gemäß

$$E_{m,k} = Z_{m,k} - W_{m,k}X_{m,k}\ ,$$

$$B_{m+1,k} = Z_{m+1,k} - W_{m,k}X_{m+1,k}\ ,$$

$$C_{m+1,k} = Z_{m+1,k} - \left( W_{m,k} + \frac{X_{m,k}^* E_{m,k}}{\left| X_{m,k} \right|^2} \right) X_{m+1,k}$$

bestimmt werden, wobei

$W_{m,k}$ der genannte Frequenzbereichs-Filterkoeffizient am genannten ersten Block ist;
$X_{m,k}$ die Spektralabtastwerte eines Eingangssignals des Echounterdrückers am genannten ersten Block sind;
$X_{m\pm i,k}$ die Spektralabtastwerte eines Eingangssignals des Echounterdrückers am genannten zweiten Block sind;
$Z_{m,k}$ die Spektralabtastwerte eines Mikrofonsignals des Echounterdrückers am genannten ersten Block sind;
$Z_{m\pm i,k}$ die Spektralabtastwerte des Mikrofonsignals des Echounterdrückers am genannten zweiten Block sind;
$E_{m,k}$ der genannte erste Restspektralfehler am genannten ersten Block ist;
$B_{m\pm i,k}$ der genannte zweite Restspektralfehler unter Verwendung der genannten Null-Aktualisierungsschrittgröße am genannten zweiten Block ist;
$C_{m\pm i,k}$ der genannte dritte Restspektralfehler unter Verwendung der genannten vollen Aktualisierungsschrittgröße am genannten zweiten Block ist; und
wobei * die Komplex-konjugierte und $\overline{(\cdot)}$ ein Glätten über $k$ bezeichnet.

**9.** Adaptiver Echounterdrücker gemäß Anspruch 8, wobei der Unterdrücker ausgebildet ist zum Bestimmen der genannten optimalen Aktualisierungsschrittgröße $\mu_{m,k}$ als

$$\mu_{m,k} = \frac{\Phi_{m,k} \overline{\left| X_{m,k} \right|^2}}{\Psi_{m,k} + \Phi_{m,k} \overline{\left| X_{m,k} \right|^2}},$$

wobei $\Psi_{m,k}$ und $\Phi_{m,k}$ bestimmt werden durch Lösen von

$$\begin{bmatrix} 1 & 0 & \overline{\left| X_{m,k} \right|^2} \\ 0 & 1 & \overline{\left| X_{m\pm i,k} \right|^2} \\ \dfrac{\overline{\left| X_{m\pm i,k} \right|^2}}{\overline{\left| X_{m,k} \right|^2}} & 1 & 0.6\overline{\left| X_{m\pm i,k} \right|^2} \end{bmatrix} \begin{bmatrix} \Psi_{m,k} \\ \Psi_{m\pm i,k} \\ \Phi_{m,k} \end{bmatrix} = \begin{bmatrix} \overline{\left| E_{m,k} \right|^2} \\ \overline{\left| B_{m\pm i,k} \right|^2} \\ \overline{\left| C_{m\pm i,k} \right|^2} \end{bmatrix}$$

unter der Bedingung $\Psi_{m,k} \geq 0$, $\Psi_{m\pm i,k} \geq 0$, $\Phi_{m,k} \geq 0$.

**10.** Adaptiver Echounterdrücker gemäß Anspruch 8, wobei der Unterdrücker ausgebildet ist zum Bestimmen der genannten optimalen Aktualisierungsschrittgröße $\mu_{m,k}$ als

$$\mu_{m,k} = 1 - \sqrt{\frac{\Psi_{m,k}}{\Psi_{m,k} + \Phi_{m,k} \overline{\left| X_{m,k} \right|^2}}},$$

wobei $\Psi_{m,k}$ und $\Phi_{m,k}$ bestimmt werden durch Lösen von

$$
\begin{bmatrix}
1 & 0 & \overline{|X_{m,k}|^2} \\
0 & 1 & \overline{|X_{m\pm i,k}|^2} \\
\dfrac{\overline{|X_{m\pm i,k}|^2}}{\overline{|X_{m,k}|^2}} & 1 & 0.6\,\overline{|X_{m\pm i,k}|^2}
\end{bmatrix}
\begin{bmatrix}
\Psi_{m,k} \\
\Psi_{m\pm i,k} \\
\Phi_{m,k}
\end{bmatrix}
=
\begin{bmatrix}
\overline{|E_{m,k}|^2} \\
\overline{|B_{m\pm i,k}|^2} \\
\overline{|C_{m\pm i,k}|^2}
\end{bmatrix}
$$

unter der Bedingung $\Psi_{m,k} \geq 0$, $\Psi_{m\pm i,k} \geq 0$, $\Phi_{m,k} \geq 0$.

**Revendications**

1. Procédé mis en oeuvre par ordinateur pour la mise à jour d'un coefficient de filtre d'un domaine de fréquence $W_{m,k}$ d'une cellule de fréquence $k$ d'un annuleur d'écho adaptatif (100), dont les coefficients de filtre peuvent être mis à jour dans le domaine de fréquence en blocs successifs $m, m+1, m+2, ...$, **caractérisé par** :

   la détermination, au niveau d'un premier bloc, d'une première erreur spectrale résiduelle $E_{m,k}$ de l'annuleur, et au niveau d'un second bloc, à la fois d'une seconde erreur spectrale résiduelle $B_{m\pm i,k}$ de l'annuleur en utilisant une taille d'étape de mise à jour à zéro pour ledit coefficient de filtre et d'une troisième erreur spectrale résiduelle $C_{m\pm i,k}$ de l'annuleur en utilisant une taille d'étape de mise à jour complète pour ledit coefficient de filtre ;
   la détermination d'une taille d'étape de mise à jour optimale $\mu_{m,k}$ pour ledit coefficient de filtre à partir des première, deuxième et troisième erreurs spectrales résiduelles ; et
   la mise à jour dudit coefficient de filtre $W_{m,k}$ en utilisant ladite taille d'étape de mise à jour optimale $\mu_{m,k}$ selon

$$
W_{m+1,k} = W_{m,k} + \mu_{m,k} \frac{E_{m,k} X^*_{m,k}}{|X_{m,k}|^2} \; ;
$$

où lesdites première, deuxième et troisième erreurs spectrales résiduelles sont déterminées selon

$$
E_{m,k} = Z_{m,k} - W_{m,k} X_{m,k} \,,
$$

$$
B_{m+1,k} = Z_{m+1,k} - W_{m,k} X_{m+1,k} \,,
$$

$$
C_{m+1,k} = Z_{m+1,k} - \left( W_{m,k} + \frac{X^*_{m,k} E_{m,k}}{|X_{m,k}|^2} \right) X_{m+1,k} \; ;
$$

   $W_{m,k}$ étant ledit coefficient de filtre du domaine de fréquences audit premier bloc ;
   $X_{m,k}$ étant les échantillons spectrals d'un signal de source d'un annuleur d'écho audit premier bloc ;
   $X_{m\pm i,k}$ étant les échantillons spectrals du signal de source de l'annuleur d'écho audit deuxième bloc ;
   $Z_{m,k}$ étant les échantillons spectrals d'un signal de microphone de l'annuleur d'écho audit premier bloc ;
   $Z_{m\pm i,k}$ étant les échantillons spectrals du signal de microphone de l'annuleur d'écho audit deuxième bloc ;
   $E_{m,k}$ étant ladite première erreur spectrale résiduelle audit premier bloc ;
   $B_{m\pm i,k}$ étant ladite deuxième erreur spectrale résiduelle lors de l'utilisation de ladite taille d'étape de mise à jour à zéro audit deuxième bloc ;

Cm$_{\pm}$i,k étant ladite troisième erreur spectrale résiduelle lors de l'utilisation de ladite taille de mise à jour complète audit deuxième bloc ; et

où * désigne le complexe conjugué et $\overline{(\cdot)}$ désigne un lissage sur k.

**2.** Procédé selon la revendication 1, où ladite taille d'étape de mise à jour optimale $\mu_{m,k}$ est déterminée sous la forme

$$\mu_{m,k} = \frac{\Phi_{m,k}\overline{\left|X_{m,k}\right|^2}}{\Psi_{m,k} + \Phi_{m,k}\overline{\left|X_{m,k}\right|^2}} \ ,$$

$\Psi_{m,k}$ et $\Phi_{m,k}$ étant déterminés en résolvant

$$\begin{bmatrix} 1 & 0 & \overline{\left|X_{m,k}\right|^2} \\ 0 & 1 & \overline{\left|X_{m\pm i,k}\right|^2} \\ \dfrac{\overline{\left|X_{m\pm i,k}\right|^2}}{\overline{\left|X_{m,k}\right|^2}} & 1 & 0.6\overline{\left|X_{m\pm i,k}\right|^2} \end{bmatrix} \begin{bmatrix} \Psi_{m,k} \\ \Psi_{m\pm i,k} \\ \Phi_{m,k} \end{bmatrix} = \begin{bmatrix} \overline{\left|E_{m,k}\right|^2} \\ \overline{\left|B_{m\pm i,k}\right|^2} \\ \overline{\left|C_{m\pm i,k}\right|^2} \end{bmatrix}$$

à condition que $\Psi_{m,k} \geq 0$, $\Psi_{m\pm i,k} \geq 0$, $\Phi_{m,k} \geq 0$.

**3.** Procédé selon la revendication 1, où ladite taille d'étape de mise à jour optimale $\mu_{m,k}$ est déterminée sous la forme

$$\mu_{m,k} = 1 - \sqrt{\frac{\Psi_{m,k}}{\Psi_{m,k} + \Phi_{m,k}\overline{\left|X_{m,k}\right|^2}}} \ ,$$

$\Psi_{m,k}$ et $\Phi_{m,k}$ étant déterminés en résolvant

$$\begin{bmatrix} 1 & 0 & \overline{\left|X_{m,k}\right|^2} \\ 0 & 1 & \overline{\left|X_{m\pm i,k}\right|^2} \\ \dfrac{\overline{\left|X_{m\pm i,k}\right|^2}}{\overline{\left|X_{m,k}\right|^2}} & 1 & 0.6\overline{\left|X_{m\pm i,k}\right|^2} \end{bmatrix} \begin{bmatrix} \Psi_{m,k} \\ \Psi_{m\pm i,k} \\ \Phi_{m,k} \end{bmatrix} = \begin{bmatrix} \overline{\left|E_{m,k}\right|^2} \\ \overline{\left|B_{m\pm i,k}\right|^2} \\ \overline{\left|C_{m\pm i,k}\right|^2} \end{bmatrix}$$

à condition que $\Psi_{m,k} \geq 0$, $\Psi_{m\pm i,k} \geq 0$, $\Phi_{m,k} \geq 0$.

**4.** Procédé selon l'une quelconque des revendications 1 à 3, où le procédé est répété pour au moins un autre coefficient de filtre de domaine de fréquences $W_{m,k}$ d'une cellule de fréquence *k* différente.

5. Procédé selon l'une quelconque des revendications 1 à 4, où lesdits premier et deuxième blocs se succèdent immédiatement l'un à l'autre dans le temps.

6. Procédé selon l'une quelconque des revendications 1 à 4, où lesdits premier et deuxième blocs sont espacés l'un de l'autre dans le temps par au moins un bloc.

7. Programme informatique concrétisé par un support lisible par ordinateur et configuré pour exécuter, lorsqu'il est mis en oeuvre sur un ordinateur, le procédé selon l'une quelconque des revendications 1 à 6.

8. Annuleur d'écho adaptatif, dont les coefficients de filtre $W_{m,k}$ d'une cellule de fréquence peuvent être mis à jour dans le domaine de fréquence en blocs successifs $m, m+1, m+2, ...$, **caractérisé en ce que** l'annuleur est conçu pour déterminer, au niveau d'un premier bloc, une première erreur spectrale résiduelle $E_{m,k}$ de l'annuleur, et au niveau d'un deuxième bloc, à la fois une seconde erreur spectrale résiduelle $B_{m\pm i,k}$ de l'annuleur, en utilisant une taille d'étape de mise à jour à zéro pour ledit coefficient de filtre et une troisième erreur spectrale résiduelle $C_{m\pm i,k}$ de l'annuleur en utilisant une taille d'étape de mise à jour complète pour ledit coefficient de filtre ;
déterminer une taille d'étape de mise à jour optimale $\mu_{m,k}$ pour ledit coefficient de filtre ($W_{m,k}$) à partir des première, deuxième et troisième erreurs spectrales résiduelles $E_{m,k}$, $B_{m\pm i,k}$, $C_{m\pm i,k}$, et
mettre à jour ledit coefficient de filtre ($W_{m,k}$) en utilisant ladite taille d'étape de mise à jour optimale $\mu_{m,k}$ selon

$$W_{m+1,k} = W_{m,k} + \mu_{m,k} \frac{E_{m,k} X_{m,k}^*}{\left| X_{m,k} \right|^2} \ ;$$

où lesdites première, deuxième et troisième erreurs spectrales résiduelles sont déterminées selon

$$E_{m,k} = Z_{m,k} - W_{m,k} X_{m,k} \ ,$$

$$B_{m+1,k} = Z_{m+1,k} - W_{m,k} X_{m+1,k} \ ,$$

$$C_{m+1,k} = Z_{m+1,k} - \left( W_{m,k} + \frac{X_{m,k}^* E_{m,k}}{\left| X_{m,k} \right|^2} \right) X_{m+1,k} \ ;$$

$W_{m,k}$ étant ledit coefficient de filtre du domaine de fréquences audit premier bloc ;
$X_{m,k}$ étant les échantillons spectrals d'un signal de source d'un annuleur d'écho audit premier bloc ;
$Xm_{\pm}$ì,k étant les échantillons spectrals du signal de source de l'annuleur d'écho audit deuxième bloc ;
$Z_{m,k}$ étant les échantillons spectrals d'un signal de microphone de l'annuleur d'écho audit premier bloc ;
$Z_{m\pm i,k}$ étant les échantillons spectrals du signal de microphone de l'annuleur d'écho audit deuxième bloc;
$E_{m,k}$ étant ladite première erreur spectrale résiduelle audit premier bloc ;
$Bm_{\pm}$ì,k étant ladite deuxième erreur spectrale résiduelle lors de l'utilisation de ladite taille d'étape de mise à jour à zéro audit deuxième bloc ;
$Cm_{\pm}$ì,k étant ladite troisième erreur spectrale résiduelle lors de l'utilisation de ladite taille de mise à jour complète audit deuxième bloc ; et
où * désigne le complexe conjugué et $\overline{(\cdot)}$ désigne un lissage sur $k$.

9. Annuleur d'écho adaptatif selon la revendication 8, où l'annuleur est conçu pour déterminer ladite taille d'étape de mise à jour optimale $\mu_{m,k}$ sous la forme

$$\mu_{m,k} = \frac{\Phi_{m,k} \overline{\left|X_{m,k}\right|^2}}{\Psi_{m,k} + \Phi_{m,k} \overline{\left|X_{m,k}\right|^2}} \ ,$$

$\Psi_{m,k}$ et $\Phi_{m,k}$ étant déterminés en résolvant

$$
\begin{bmatrix}
1 & 0 & \overline{\left|X_{m,k}\right|^2} \\
0 & 1 & \overline{\left|X_{m\pm i,k}\right|^2} \\
\dfrac{\overline{\left|X_{m\pm i,k}\right|^2}}{\overline{\left|X_{m,k}\right|^2}} & 1 & 0.6\,\overline{\left|X_{m\pm i,k}\right|^2}
\end{bmatrix}
\begin{bmatrix}
\Psi_{m,k} \\
\Psi_{m\pm i,k} \\
\Phi_{m,k}
\end{bmatrix}
=
\begin{bmatrix}
\overline{\left|E_{m,k}\right|^2} \\
\overline{\left|B_{m\pm i,k}\right|^2} \\
\overline{\left|C_{m\pm i,k}\right|^2}
\end{bmatrix}
$$

à condition que $\Psi_{m,k} \geq 0$, $\Psi_{m\pm i,k} \geq 0$, $\Phi_{m,k} \geq 0$.

**10.** Annuleur d'écho adaptatif selon la revendication 8, où l'annuleur est conçu pour déterminer ladite taille d'étape de mise à jour optimale $\mu_{m,k}$ sous la forme

$$\mu_{m,k} = 1 - \sqrt{\frac{\Psi_{m,k}}{\Psi_{m,k} + \Phi_{m,k} \overline{\left|X_{m,k}\right|^2}}} \ ,$$

$\Psi_{m,k}$ et $\Phi_{m,k}$ étant déterminés en résolvant

$$
\begin{bmatrix}
1 & 0 & \overline{\left|X_{m,k}\right|^2} \\
0 & 1 & \overline{\left|X_{m\pm i,k}\right|^2} \\
\dfrac{\overline{\left|X_{m\pm i,k}\right|^2}}{\overline{\left|X_{m,k}\right|^2}} & 1 & 0.6\,\overline{\left|X_{m\pm i,k}\right|^2}
\end{bmatrix}
\begin{bmatrix}
\Psi_{m,k} \\
\Psi_{m\pm i,k} \\
\Phi_{m,k}
\end{bmatrix}
=
\begin{bmatrix}
\overline{\left|E_{m,k}\right|^2} \\
\overline{\left|B_{m\pm i,k}\right|^2} \\
\overline{\left|C_{m\pm i,k}\right|^2}
\end{bmatrix}
$$

à condition que $\Psi_{m,k} \geq 0$, $\Psi_{m\pm i,k} \geq 0$, $\Phi_{m,k} \geq 0$.

ROOM 108

111

115 ECHO

$d(t)$

NEAR END SIGNAL 116 $v(t)$

112

110

D/A

113

D\A

$z(n)$ 107

FILTER 120

130

$y(n)$ 121

+

−

125 $w$

101

SOURCE

FAR END SIGNAL 105 $x(n)$

ACOUSTIC ECHO CANCELLER

100

ADAPTIVE ALGORITHM 200

OUTGOING SIGNAL $e(n)$ 106

119

SINK

*Fig. 1*

*Fig. 2*

**FAST LMS**

*Fig. 3*

EP 2 930 917 B1

*Fig. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8275120 B2
- US 20120290525 A1
- US 8325909 B2
- US 8355511 B2
- WO 2012158164 A1
- US 20120250852 A1

### Non-patent literature cited in the description

- **P. VARY ; R. MARTIN.** Digital speech transmission: Enhancement, coding and error concealment. Wisley, 2006
- **T. GÄNSLER ; J. BENESTY.** The fast normalized cross-correlation double-talk detector. *Signal Processing,* June 2006, vol. 86 (6), 1124-1139
- **T. VAN WATERSCHOOT ; G. ROMBOUTS ; P. VERHOEVE ; M. MOONEN.** Double-talk-robust prediction error identification algorithms for acoustic echo cancellation. *IEEE Transactions on Signal Processing,* March 2007, vol. 55 (3), 846-858
- **B. H. NITSCH.** A frequency-selective stepfactor control for an adaptive filter algorithm working in the frequency domain. *Signal Processing,* September 2000, vol. 80 (9), 1733-1745
- **K. SHI ; X. MA.** A frequency domain step-size control method for LMS algorithms. *IEEE Signal Processing Letters,* February 2010, vol. 17 (2), 125-128